# EUROPÄISCHE PATENTSCHRIFT

(11) **EP 2 011 387 B1**
(45) Veröffentlichungstag und Bekanntmachung des Hinweises auf die Patenterteilung: **17.02.2010**
(21) Anmeldenummer: 08159499.6
(22) Anmeldetag: 02.07.2008
(51) Int. Cl.: A01G 13/02, B32B 33/00, C08J 5/18, C09K 5/06, E04B 1/76, F28D 20/02

(54) **Baufolie**
Construction foil
Feuille de construction

(30) Priorität: 04.07.2007 EP 07111712
(43) Veröffentlichungstag der Anmeldung: 07.01.2009
(73) Patentinhaber: Knauf Gips KG, 97346 Iphofen (DE)
(72) Erfinder: Hummel, Hans-Ulrich, Dr. Prof., 97346 Iphofen (DE)
(74) Vertreter: Schreiber, Christoph

(56) Entgegenhaltungen:
- EP-A- 0 073 836
- WO-A-03/085346
- US-A- 3 772 232
- US-A- 5 532 039
- US-A1- 2004 224 156

## Beschreibung

Die vorliegende Erfindung betrifft eine Folie als Untergrund für einen Außenputz oder eine Außenfassade sowie ein Dämmelement.

Dem Fachmann sind zahlreiche Fassendendämmsysteme bekannt. Typische Systeme umfassen das Anbringen eines Dämmmaterials auf einer Außenwand, beispielsweise mit Hilfe eines Klebemörtels. Anschließend werden auf die Außenseite des Dämmmaterials eine Grundierung und ein Putz aufgebracht. Neben Styropormaterialien können auch mineralische Materialen zum Einsatz kommen, beispielsweise Mineralfaserplatten.

Durch die verbesserte Dämmung der Wand werden Energieverluste reduziert. Da hierdurch in erheblichem Umfang Energie eingespart werden kann, besteht weiterhin Bedarf nach verbesserten Materialien der Dämmung von Wänden.

Aufgabe der vorliegenden Erfindung war es, alternative Materialien für Fassadendämmsysteme bereitzustellen.

Gelöst wird die Aufgabe durch eine Folie umfassend:
- Bereiche von Latentwärmespeichermaterialien in einer Menge von 1 bis 40 Gew.-%
- Perforationsbereiche, in denen sich keine Latentwärmespeichermaterialien befinden
- Aussparungsbereiche, in denen die Folie Öffnungen aufweist.

Die erfindungsgemäße Folie weist zum einen Bereiche auf, in denen Latentwärmespeichermaterialien vorhanden sind. Dabei können Latentwärmespeichermaterialien direkt in eine Folie eingeschweißt sein. Es können jedoch auch mikroverkapselte Latentwärmespeichermaterialien benutzt werden, die dann von einer Folie umhüllt sind.

Latentwärmespeichermaterialien sind dem Fachmann bekannt. Üblicherweise handelt es sich lipophile Materialien, die im gewünschten Temperaturbereich (zwischen minimal -20°C und maximal 120°C) eine Fest-/Flüssigphasenumwandlung zeigen.

In einer bevorzugten Ausführungsform umfasst die Folie mindestens zwei Schichten, wobei die Latentwärmespeichermaterialien zwischen den Schichten liegen. Die Gewichtsmenge von 1 bis 40 Gew.-% bezieht sich auf das Gesamtgewicht der Folie einschließlich Latentwärmespeichermaterialien.

In einer besonders bevorzugten Ausführungsform ist der Aufbau der erfindungsgemäßen Folie wie der einer Luftkissenfolie, wobei jedoch die "Luftkissen" mit Latentwärmespeichermaterialien gefüllt sind.

Geeignete Schmelzbereiche für die Latentwärmespeichermaterialien liegen zwischen 5 und 30°C, bevorzugt 5 bis 10°C, mehr bevorzugt zwischen 5 bis 7°C.

Grundsätzlich geeignete Latentwärmespeichermaterialien sind beispielsweise
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan,Cyclodecan;
- aromatische Kohlenwasserstoffverbindungen wie Benzol, Naphthalin, Biphenyl, o- oder n-Terphenyl, C₁-C₄₀-alkyl-substituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öloder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Latentwärmespeichermaterialen auf Basis von Paraffinen werden besonders bevorzugt.

In einer Ausführungsform der Erfindung liegen die Latentwärmespeichermaterialien verkapselt vor, d.h. die Latentwärmespeichermaterialien sind umhüllt und werden dann in die Folie eingebracht.

Die WO 2003/016650, auf die vollinhaltlich Bezug genommen wird, beschreibt unter anderem Verfahren zur Herstellung von verkapselten Latentwärmespeichermaterialien.

In typischen Herstellungswegen wird die einzukapselnde, lipophile Substanz (das Latentwärmespeichermaterial) zusammen mit Monomeren, einem Radikalstarter und einem Schutzkolloid in eine stabile Öl-in-Wasser-Emulsion gebracht. Durch Auslösung der Polymerisolation entstehen Polymere, die die lipophilen Substanzen umschließen. Wege hierzu sind beispielsweise auch in der EP 0 457 154 A1 beschrieben.

Geeignete Kapselhüllen sind beispielsweise aus (Meth)-Acrylsäureesterpolymeren.

Abhängig vom gewünschten Einsatz und der Dicke der Folien liegen die Kapselgrößen im Bereich von 1 bis 5000 µm, wobei bevorzugte Bereiche 5 bis 100 µm, besonders bevorzugt 10 bis 50 µm sind.

Weiterhin umfasst die Folie Perforationsbereiche, in denen sich keine Latentwärmespeichermaterialien befinden. Dies sind Bereiche, in denen die Folie beispielsweise durch Schlitze oder Punkte geschwächt bzw. perforiert ist. Diese Bereiche eignen sich insbesondere zur Aufnahme von Befestigungselementen zur Montage der Folien.

Drittens umfasst die Folie Aussparungsbereiche, in denen die Folie Öffnungen aufweist, d.h. die Folie weist größere offene Bereiche auf. Bevorzugt nehmen diesen Aussparungsbereiche etwas 5 bis 25% der gesamten Fläche der Folie ein. Bei einer Montage der Folie im Rahmen einer Fassadendämmung wird abschließend ein Putzmaterial aufgetragen. Durch die Aussparungsbereiche kann der Putz in diesen Bereichen das darunterliegende Dämmmaterial binden, so dass eine besonders gute Haftung des Putzes und damit eine gute Einbindung der Folie erreicht wird.

Geeignete Dicken für die Folie liegen im Bereich von 8 bis 80 µm, wobei Dicken von 10 bis 25 µm bevorzugt sind. Weist die Folie zwei oder mehr Schichten auf, so hat jede einzelne Schicht eine Dicke von bevorzugt etwa 3 bis 7 µm.

Als Folienmaterialien eignen sich grundsätzlich alle Kunststoffmaterialien, die auch heute für Folien eingesetzt werden, beispielsweise Polyolefine, Polyvinylchloride, Polyamide und Polyvinylacetate.

Die erfindungsgemäßen Folien lassen sich insbesondere unter Putz im Fassadenbereich anwenden, wobei sie nach der Montage überputzt werden. Auf diese Weise kann der Taupunkt der Fassade angehoben werden.

Weitere Anwendungsmöglichkeiten wären für eine Kühldecke, wobei die Folie mit der üblichen Kapillarrohrmatte an einer Decke befestigt wird und dann überputzt werden kann.

Weitere Anwendungsmöglichkeiten ergeben sich beim Einbau einer abgehängten Decke. Hierzu könnte die Folie beispielsweise mit einer üblichen Lochplatte (Akustikpatte) auf der einen Seite kaschiert werden und dann an einer abgehängten Decke montiert werden. Eine solche abgehängte Decke wäre in der Lage, an heißen Tagen Wärme aufzunehmen und damit den Raum zu kühlen und zu kühleren Zeiten die entsprechende Wärme wieder abzugeben.

Gegenstand der Erfindung ist auch ein Dämmelement, das ein Dämmmaterial umfasst, das auf einer der Hauptflächen eine erfindungsgemäße Folie aufweist. Das Dämmmaterial kann beispielsweise Styropor oder eine Mineralfaserplatte sein. Die Folie kann beispielsweise durch Kleben befestigt sein.

Ein weiterer Gegenstand der Erfindung ist ein Verfahren zur Dämmung einer Hauswand umfassend die Schritte:
- Befestigen eines Dämmmaterials an der Hauswand
- Befestigen einer erfindungsgemäßen Folie am Dämmmaterial
- gegebenenfalls Anbringen von Befestigungselementen
- Verputzen der Hauswand mit einem Putzmaterial, wobei das Putzmaterial durch die Aussparungsbereiche tritt.

Ein weiterer Gegenstand des Verfahrens ist ein Verfahren zur Dämmung einer Hauswand umfassend die Schritte:
- Befestigen eines erfindungsgemäßen Dämmelements an der Hauswand
- gegebenenfalls Anbringen von Befestigungselementen
- Verputzen der Hauswand mit einem Putzmaterial, wobei das Putzmaterial durch die Aussparungsbereiche tritt.

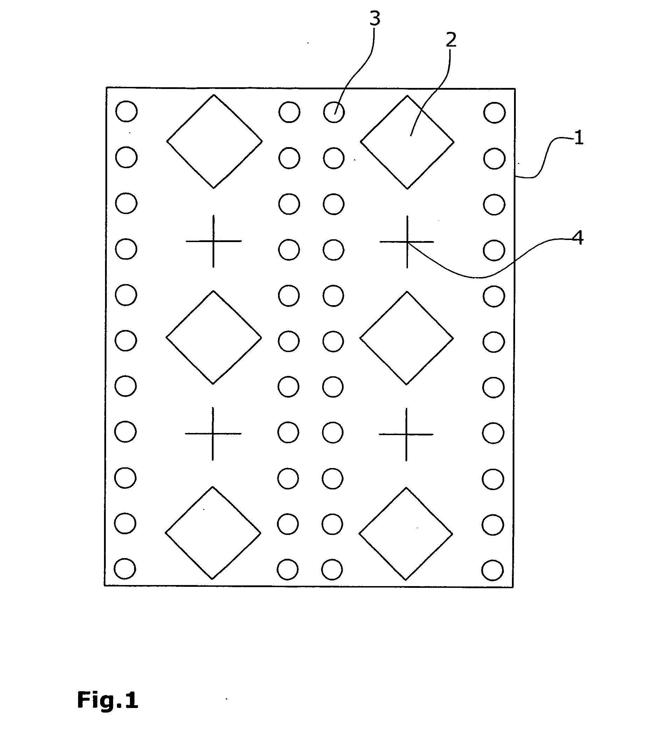

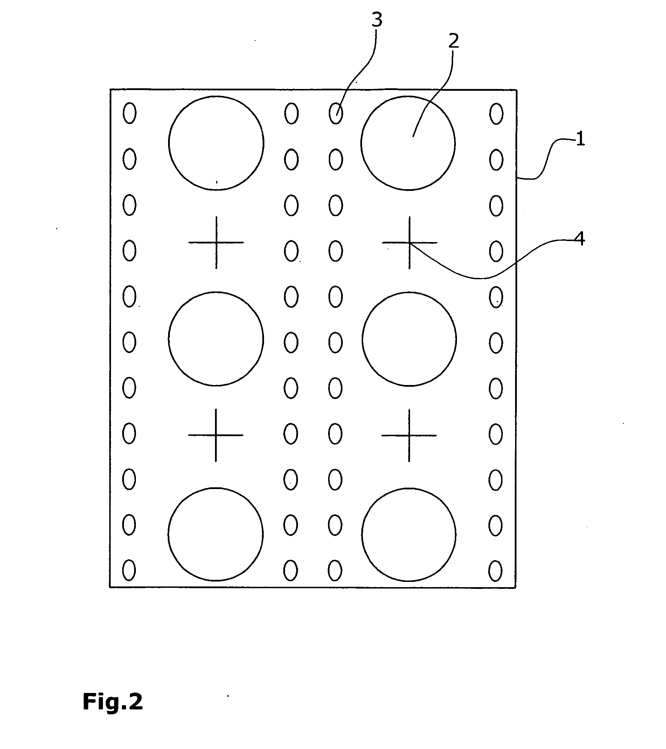

Die Figuren 1 und 2 zeigen beispielhafte Ausgestaltungen der erfindungsgemäßen Folie. Die erfindungsgemäße Folie (1) weist Aussparungsbereiche (2) auf, die verschiedene Gestaltungen annehmen können und innerhalb der Folie gleiche oder unterschiedliche Formen annehmen können. Weiterhin weist die Folie Bereiche von Latentwärmespeichermaterialen (3) auf, die unterschiedliche Formen annehmen können und innerhalb einer Folie gleich oder unterschiedlich sein können. Weiterhin weist die Folie Perforationsbereiche (4) auf, die in den Ausführungsformen der Erfindung als Schlitze dargestellt sind. Die Folie kann in diesen Bereichen durch Schlitze oder Löcher geschwächt sein. Es genügt aber auch, wenn eindeutig erkennbar ist, dass in diesen Bereichen keine Latentwärmespeichermaterialien vorhanden sind, damit dort Befestigungselemente genutzt werden können.

Die Erfindung wird durch die nachfolgenden Beispiele näher erläutert.

### Beispiel 1

Folien können nach den gängigen Verfahren durch Extrusion oder Co-Extrusion hergestellt werden. Dabei werden die mikroverkapselten Latentwärmespeicher direkt der Kunststoffschmelze zugegeben, unmittelbar vor dem Extrusionsprozess.

Die Folie wird nach Extrusion in einem Wasserbad gekühlt.

Im Fall der Co-Extrusion kann eine Folie mit Ausstülpungen versehen werden, die mit den entsprechend verflüssigten Latentwärmespeichermaterialien gefüllt werden.

Anschließend wird die zweite Folienlage co-extrudiert, wobei die mit Latentwärmespeicher gefüllte erste Lage abgeschlossen wird.

## Patentansprüche

1. Folie umfassend:
- Bereiche von Latentwärmespeichermaterialien in einer Menge von 1 bis 40 Gew.-%
- Perforationsbereiche, in denen sich keine Latentwärmespeichermaterialien befinden
- Aussparungsbereiche, in denen die Folie Öffnungen aufweist.

2. Folie nach Anspruch 1, **dadurch gekennzeichnet, dass** die Perforationsbereiche geeignet sind, Befestigungselemente aufzunehmen.

3. Folie nach Anspruch 1, **dadurch gekennzeichnet, dass** die Aussparungsbereiche 2 bis 25% der Gesamtfläche der Folie umfassen.

4. Folie nach mindestens einem der Ansprüche 1 bis 3, **dadurch gekennzeichnet, dass** die Folie doppellagig ist.

5. Folie nach mindestens einem der Ansprüche 1 bis 4, **dadurch gekennzeichnet, dass** die Latentwärmespeichermaterialien ausgewählt sind aus aliphatischen Kohlenwasserstoffverbindungen, aromatischen Kohlenwasserstoffverbindungen, gesättigten oder ungesättigten Fettsäuren, gesättigten oder ungesättigten Fettalkoholen, gesättigten oder ungesättigten Ester, Wachsen, halogenierten Kohlenwasserstoffverbindungen und Mischungen davon.

6. Folie nach mindestens einem der Ansprüche 1 bis 5, **dadurch gekennzeichnet, dass** die Dicke der Folie 8 bis 80 µm beträgt.

7. Folie nach mindestens einem der Ansprüche 1 bis 6, **dadurch gekennzeichnet, dass** das Folienmaterial ausgewählt wird aus Polyolefin, Polyvinylchlorid, Polyamid, Polyvinylacetat und Mischungen davon.

8. Folie nach mindestens einem der Ansprüche 1 bis 7, **dadurch gekennzeichnet, dass** die Latentwärmespeicher mikroverkapselt sind.

9. Folie nach mindestens einem der Ansprüche 1 bis 8, **dadurch gekennzeichnet, dass** die Latentwärmespeichermaterialien einen Schmelzbereich zwischen 5 und 30°C, bevorzugt 5 bis 10°C, mehr bevorzugt 5 bis 7°C aufweisen.

10. Dämmelement umfassend ein Dämmmaterial mit einer mindestens an einer Fläche befestigten Folie nach einem der Ansprüche 1 bis 9.

11. Verfahren zur Dämmung einer Hauswand umfassend die Schritte:
- Befestigen eines Dämmmaterials an der Hauswand
- Befestigen einer Folie nach einem der Ansprüche 1 bis 9 am Dämmmaterial
- gegebenenfalls Anbringen von Befestigungselementen
- Verputzen der Hauswand mit einem Putzmaterial, wobei das Putzmaterial durch die Aussparungsbereiche tritt.

12. Verfahren zur Dämmung einer Hauswand umfassend die Schritte:
- Befestigen eines Dämmelements nach Anspruch 10 an der Hauswand
- gegebenenfalls Anbringen von Befestigungselementen
- Verputzen der Hauswand mit einem Putzmaterial, wobei das Putzmaterial durch die Aussparungsbereiche tritt.

## Claims

1. A sheet, comprising:
- regions of latent heat storage materials in a proportion of from 1 to 40% by weight;
- perforation regions in which there are no latent heat storage materials;
- cutout regions in which the sheet has openings.

2. The sheet according to claim 1, **characterized in that** said perforation regions are capable of receiving fastening elements.

3. The sheet according to claim 1, **characterized in that** said cutout regions comprise from 2 to 25% of the total surface area of the sheet.

4. The sheet according to at least one of claims 1 to 3, **characterized in that** said sheet is a two-ply sheet.

5. The sheet according to at least one of claims 1 to 4, **characterized in that** said latent heat storage materials are selected from aliphatic hydrocarbon compounds, aromatic hydrocarbon compounds, saturated or unsaturated fatty acids, saturated or unsaturated fatty alcohols, saturated or unsaturated esters, waxes, halogenated hydrocarbon compounds and mixtures thereof.

6. The sheet according to at least one of claims 1 to 5, **characterized in that** the thickness of the sheet is from 8 to 80 µm.

7. The sheet according to at least one of claims 1 to 6, **characterized in that** the sheet material is selected from polyolefin, polyvinyl chloride, polyamide, polyvinyl acetate and mixtures thereof.

8. The sheet according to at least one of claims 1 to 7, **characterized in that** the latent heat stores are microencapsulated.

9. The sheet according to at least one of claims 1 to 8, **characterized in that** said latent heat storage materials have a melting range of from 5 to 30 °C, preferably from 5 to 10 °C, more preferably from 5 to 7 °C.

10. An insulating element comprising an insulating material with a sheet according to any of claims 1 to 9 attached to at least one surface thereof.

11. A process for insulating a house wall, comprising the steps of:
- attaching an insulating material to the house wall;
- attaching a sheet according to any of claims 1 to 9 to the insulating material;
- optionally applying fastening elements;
- plastering the house wall with a plastering material, wherein said plastering material penetrates through said cutout regions.

12. A process for insulating a house wall, comprising the steps of:
- attaching an insulating element according to claim 10 to the house wall;
- optionally applying fastening elements;
- plastering the house wall with a plastering material, wherein said plastering material penetrates through said cutout regions.

## Revendications

1. Film comprenant :
- des zones de matières d'accumulation de chaleur latente à raison de 1 à 40% en poids,
- des zones comportant des perforations, dans lesquelles les matières d'accumulation de chaleur latente sont absentes,
- des zones d'épargne, dans lesquelles le film présente des ouvertures.

2. Film selon la revendication 1, **caractérisé en ce que** les zones comportant des perforations sont appropriées à recevoir des éléments de fixation.

3. Film selon la revendication 1, **caractérisé en ce que** les zones d'épargne occupent 2% à 25% de la surface totale du film.

4. Film selon au moins l'une quelconque des revendications 1 à 3, **caractérisé en ce que** le film est en deux couches.

5. Film selon au moins l'une quelconque des revendications 1 à 4, **caractérisé en ce que** les matières d'accumulation de chaleur latente sont sélectionnées parmi les composés d'hydrocarbures aliphatiques, les composés d'hydrocarbures aromatiques, les acides gras saturés ou insaturés, les alcools gras saturés ou insaturés, les esters saturés ou insaturés, les cires, les hydrocarbures halogénés et leurs mélanges.

6. Film selon au moins l'une quelconque des revendications 1 à 5, **caractérisé en ce que** l'épaisseur du film va de 8 à 80 µm.

7. Film selon au moins l'une quelconque des revendications 1 à 6, **caractérisé en ce que** la matière du film est sélectionnée parmi la polyoléfine, le poly(chlorure de vinyle), le polyamide, le poly(acétate de vinyle) et leurs mélanges.

8. Film selon au moins l'une quelconque des revendications 1 à 7, **caractérisé en ce que** les matières d'accumulation de chaleur latente sont microencapsulées.

9. Film selon au moins l'une quelconque des revendications 1 à 8, **caractérisé en ce que** les matières d'accumulation de chaleur latente présentent un domaine de fusion compris entre 5°C et 30°C, allant de préférence de 5°C à 10°C, de manière plus particulièrement préférée, de 5°C à 7°C.

10. Élément d'isolation comprenant une matière d'isolation avec au moins un film selon l'une quelconque des revendications 1 à 9 fixé sur une face.

11. Procédé d'isolation d'un mur de maison comprenant les étapes consistant à :
- fixer une matière isolante sur le mur de maison
- fixer un film selon l'une quelconque des revendications 1 à 9 sur une matière isolante
- éventuellement mettre en place des éléments de fixation
- enduire le mur de maison avec une matière d'enduit de sorte que la matière d'enduit traverse les zones d'épargne.

12. Procédé d'isolation d'un mur de maison comprenant les étapes consistant à :
- fixer un élément d'isolation selon la revendication 10 sur le mur de maison
- éventuellement mettre en place des éléments de fixation
- enduire le mur de maison avec une matière d'enduit de sorte que la matière d'enduit traverse les zones d'épargne.
